Europäisches Patentamt

European Patent Office

Office européen des brevets

(11) Publication number: **0 491 069 A1**

## EUROPEAN PATENT APPLICATION

(21) Application number: **90124489.7**

(22) Date of filing: **18.12.90**

(51) Int. Cl.⁵: **H04N 7/08**

(43) Date of publication of application:
**24.06.92 Bulletin 92/26**

(84) Designated Contracting States:
**DE FR GB IT**

(71) Applicant: **International Business Machines Corporation**
**Old Orchard Road**
**Armonk, N.Y. 10504(US)**

㊈ **DE FR GB**

(71) Applicant: **IBM SEMEA S.r.l.**
**Via Fara, 35, P.O. Box 137**
**I-20124 Milan(IT)**

㊷ **IT**

(72) Inventor: **Pirovano, Tullio**
**Via Banfi 15**
**I-20059 Vimercate (MI)(IT)**
Inventor: **Villa, Giuseppe**
**Vicolo Brambilla 6**
**I-20065 Inzago (MI)(IT)**

(74) Representative: **Lettieri, Fabrizio**
**c/o IBM Semea S.r.l. Direzione Brevetti**
**Circonvallazione Idroscalo P.O. Box 137**
**I-20090 Segrate (Milano)(IT)**

(54) Selective data distribution method using unidirectional broadcast or multicast transmission.

㊗ A method for the unidirectional transmission of data from one or more information-providers to one or more end-users over a broadcast or multicast transmission medium.
Information-providers act as sources of data consisting of a plurality of variable length messages and issue control packets, enabling/disabling packets and information packets. End-user has a unique address as a permanent attribute. The enabling/disabling packets selectively activates or disactivates a specific end-user or a specific group of end-users. Ability to receive data can be explicitly revoked to one or more end-users by the respective information-provider or expires after a given time out. Grouping of the end-users is managed and updating remotely by each information-provider through control packets. Any end-user may be simultaneously included in more groups.

Fig. 1

The invention relates to a method for transmitting data over a unidirectional broadcast or multicast transmission medium. More specifically it relates to a method for transferring digitally encoded data from one or more information-providers, acting as the sources of information, to selected end-users or groups of end-user through a single broadcaster.

US-A-4,829,569 discloses a subscriber television system in which individual text messages may be directed to individual subscribers mixed with the TV programs. US-A-4,700,184 relates to a one-way data transmission system. A field of useful data is split into a number of basic entities, called "data groups". Each data group is, in turn, split into smaller basic entities or "data blocks". Each resulting data block is inserted in a data packet to be transmitted by means of a teletext like technique.

The cited prior art does not teach a method for simultaneous, concurrent transmission of data originating from a plurality of information-providers and directed to a broadcaster which, without using a central data base, retransmits such data to different end-users or different groups of end-users. Prior art suggests only a distinction between a transmission toward a single addressee and a broadcast transmission. According to the prior art, individual subscribers in a subscription television system can be addressed for transmission of either billing information or individual messages. The same scheme may be applied to non-subscription television system, substituting in the subscriber TV set the decoder with a special purpose device.

However, in the prior art, the source of data to be distributed to individual addressees is unique; this is the case in which a central data base, updated by a plurality of information-providers, sends messages to different subscribers about their credit/billing status.

However prior art does not teach a method for implementing multicast transmissions of data provided by different information-providers, over a single broadcast system, for grouping the end-users in groups simultaneously receiving the same data and for dynamically modifying the end-users groups. There is the need of distributing data originated from different, unrelated sources that share the access to the data distribution system through a single broadcaster.

The present invention as claimed allows that several information-providers provide data to a plurality of end-users, each being able to select the desired service. In fact any end-user receives only the data that it is enabled to receive and no data discrimination has to be done by the end-user at its receiving station.

It is also desirable that the information-providers do not arrange the data content of the transmission in a centralised data base storage located in the broadcaster premises as it is the case for example, when the data are extremely variable in time and not worth of being deposited in a centralised data base for a successive transmission, or when there are high security requirements or extremely high volumes of data. It is evident that in the above situations each information-provider should be able to organise its transmission, select the end-users to be addressed and organise the addressees in dynamically arranged groups.

One advantage of the invention is that each information-provider is able to simultaneously distribute different data to different end-users, or groups of end-users. It is further desirable that each end-user be guaranteed of the identity of the information-provider, i.e. the source of the data from which it is currently receiving data. Another advantage of the invention is that the method may be used in a television network since the data can be intermixed with TV programmes using the standard teletext protocol.

For a better understanding of the present invention, together with other and further advantages and features thereof, reference is made to the following description and to the accompanying drawings.

Figure 1 represents a schematic view of the data distribution system between the information-providers and the end-users according to the present invention.

Figure 2 shows the general packet structure.

Figure 3 describes a block diagram of the apparatus implementing the transmission protocol.

Figure 4 shows the preferred embodiment packet structure.

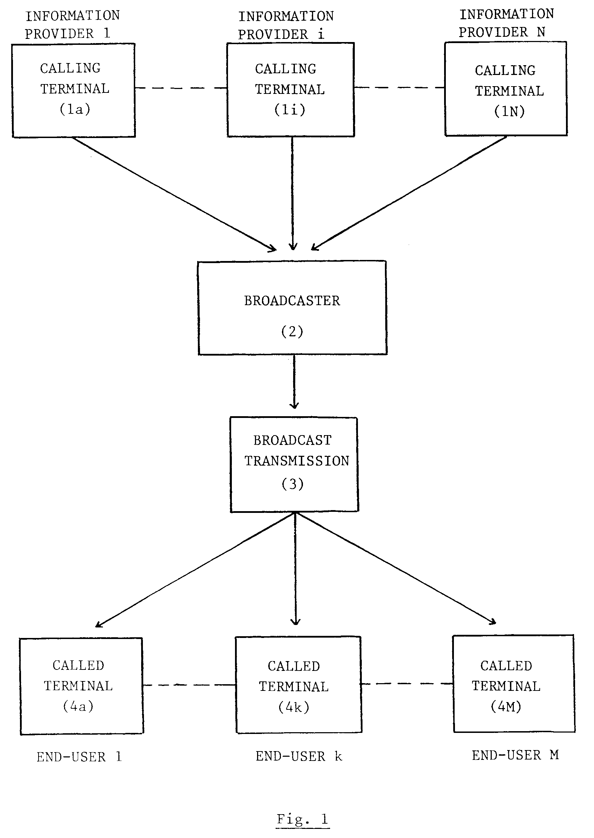

With reference to Figure 1, a plurality of information-providers (1a,..1i,..1N) are connected to a broadcaster (2) having the function of transmitting the received data through a broadcasting medium (3) to a plurality of end-users (4a,..4k,..4M).

The broadcaster (2) is a specific unit having the function of collecting and transmitting the data received from the information-providers. However also the broadcaster may transmit data originated by itself, acting in this case as an information-provider.

The invention implements a selective distribution mechanism ensuring N to M unidirectional connections over broadcast medium between N information-providers and M end-users. Data is structured as digitally encoded packets having either data transfer or various control purposes, as it will be described in further detail.

Each end-user has a unique identifier representing a permanent attribute. Selective transmission is achieved by establishing a connection between an information-provider and a specific end-user, each end-user being identified by a different unique identifier.

It has to be noted that each information-provider may concurrently transmit, in time division, different messages or data arranged in packets to an end-user or to different end-users or groups of end-users; in each of these transmissions the information-provider may be referenced as "calling terminal". Conversely each end-user may be engaged simultaneously in different concurrent connections with one or more information-providers; in each of these connections the end-user may be referenced as "called terminal".

Once a connection is established, it is possible to transmit data from the information-provider to the connected end-user. A connection may be terminated as a result of a specific command issued by the calling terminal or may automatically terminate after a given timeout; during the connection establishment phase, the calling terminal specifies the duration of the connection to the called terminal(s).

This scheme has the advantage of ensuring that the connection will be automatically terminated without relying on recovery actions to be executed by either the calling terminal or the called terminal.

The parameters identifying a connection between a calling terminal and a called terminal are here reported:

1) ⟨calling-terminal-address⟩ constituted by:

   * ⟨information-provider-id⟩, a unique identifier of the information-provider, and

   * ⟨multiplex-id⟩, identifying a particular connection between an information-provider and one (or a group) of end-users; it is used to multiplex different connections originating from the same information-provider.

2) ⟨called-terminal-address⟩ constituted by:

   * ⟨unique-id⟩, a unique identifier of the called terminal; it is used only during the establishment of the connection.

Once a connection is established the called terminal discriminates the received data packets only on the basis of ⟨calling-terminal-address⟩ parameter; this allows up to N simultaneous connections between one calling terminal and N called terminals, since all data packets originated from the same calling terminal include the same ⟨calling-terminal-address⟩. In such a case the calling terminal may sequentially establish N connections with N called terminals, one connection at a time; it can then proceed to multicast distribution of data to all connected called terminals. Called terminals can also be aggregated in groups so that the same connection and disconnection procedure may be applied to a group of called terminals instead of a specific called terminal at a time.

The method allows that a calling terminal splits up the called terminals into groups, so that a "single" connection procedure establishes the connection with "all" the members of a group. Groups may be static or dynamic entities; the capacity of creating or deleting a group, of adding or deleting a member in a group, resides entirely in the information-provider that is considered as a group owner. Group membership relations are status information maintained in a private storage in each end-user terminal but are not modifiable by the end-user. In each called terminal the membership relation is represented by a membership tuple (i.e. a combination of n elements). The maximum number of membership tuples that can be obtained is only a design issue.

According to the method of the present invention a central authority, namely the broadcaster, distributes periodically a clock message so that time alignment between the clocks of the information-providers and the end-users is maintained; this time alignment is necessary for terminating connections and membership relations.

Transmitted messages carrying data and control information are structured as digitally encoded packets. The following structure of the packet represents a "high level" representation of the required information to be carried by every packet. Depending on the specific embodiment, other fields (error correction, framing, masking fields) may be added into this packet but this is outside the scope of the present invention.

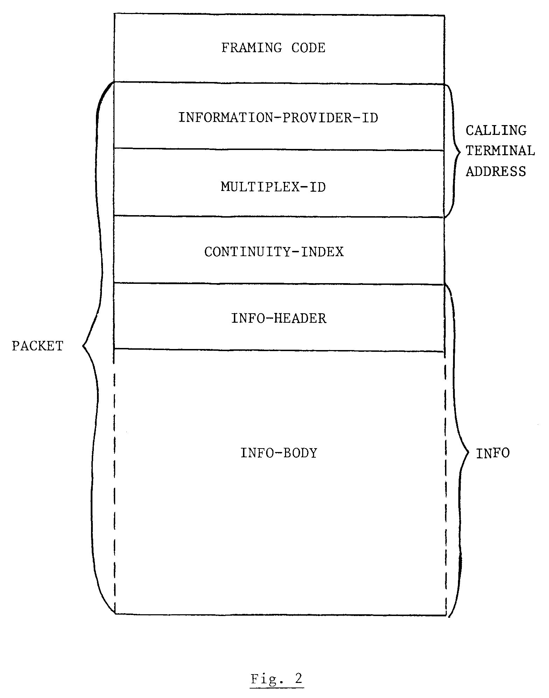

Packets have the structure shown in Figure 2.

A framing-code field providing packet delimitation is put before each packet.

In the following the symbol " :: = " means "is composed of ":

⟨packet⟩ :: = ⟨calling-terminal-address⟩⟨continuity-index⟩⟨info⟩

where:    ⟨calling-terminal-address⟩ :: =

   ⟨information-provider-id⟩⟨multiplex-id⟩ previously defined.

⟨info⟩ :: = ⟨info-header⟩⟨info-body⟩

The ⟨calling-terminal-address⟩ represents the address of the calling terminal and an identifier of a particular established connection. The ⟨continuity-index⟩ is a progressive index of the packets and allows to recognise if a packet is repeated. In fact, in this case, the ⟨continuity-index⟩ is kept constant; this allows any decoder of the called terminals to recognise between a new packet and a copy of the same packet. ⟨info-header⟩ is an identifier for specifying the packet type as indicated in the following.

⟨info-body⟩ is the information carried by a specific packet type; of course this field will have a structure that depends on the packet type.

In addition to the data transfer process described above that requires the establishment of a connection between the calling terminals and the called terminals, another data transfer process is provided by the method specifically aimed at the transfer of short, high priority, messages called datagrams that can be contained in a single packet; said messages can be addressed either to a single called terminal or to a group of called terminals. The two processes can coexist simultaneously over the same transmission system.

The following are some types of ⟨info-body⟩:

1) Network Connection Request (NCR) packet. It establishes a connection between a calling terminal and a specific called terminal. NCR packet parameters are:

⟨info-body⟩ :: = ⟨unique-id⟩⟨connection-duration⟩

Where: ⟨unique-id⟩ is the address of the called terminal. ⟨connection-duration⟩ indicates the time after which the connection is automatically terminated.

In addition to the above elements the preferred embodiment may also define a ⟨class-of-service⟩ parameter that indicates a particular category of data transfer and error detection and recovery algorithms to be applied during data transmission.

2) Network Disconnection Request (NDR) packet. It terminates a connection between a calling terminal and a specific called terminal. NDR packet parameters are:

⟨info-body⟩ :: = ⟨unique-id⟩

Where ⟨unique-id⟩ is the address of the called terminal.

3) Network Group Connection Request (NGCR) packet. It establishes a connection between a calling terminal and a group of called terminals; the group address of the called terminals is contained in a parameter field. NGCR packet parameters are:

⟨info-body⟩ :: = ⟨group-id⟩⟨connection-duration⟩

Where: ⟨group-id⟩ univocally identifies the group of called terminals. ⟨connection-duration⟩ indicates the time after which the connection is automatically terminated.

With reference to the NCR and NGCR packets, in addition to the above parameters a preferred embodiment also includes another parameter called ⟨class-of-service⟩, that indicates a particular category of data transfer and error detection and recovery algorithms to be applied during data transmission.

4) Network Group Disconnection Request (NGDR) packet. It terminates a connection between a calling terminal and a group of called terminals. NGDR packet parameters are:

⟨info-body⟩ :: = ⟨group-id⟩

Where ⟨group-id⟩ univocally identifies the group of called terminals.

5) Network Information (NI) packet. It transports data for a pre-established connection between a calling terminal and one or more called terminals or groups of called terminals. NI packet parameters are:

⟨info-body⟩ :: = ⟨data-unit⟩

Where ⟨data-unit⟩ is the unit of information to be transferred from a calling terminal to one or a group of specific called terminals.

6) Network Exception (NE) packet. This packet will be used to convey errors detected at the calling terminal site. NE packet parameters are:

⟨info-body⟩ :: = ⟨exception-message⟩

Where ⟨exception-message⟩ indicates the related code for the signalled exception or any other useful information for exception handling.

7) Network Unsolicited Information (NUI) packet. This packet will be used to convey a datagram to a specific called terminal. NUI packet parameters are:

⟨info-body⟩ :: = ⟨unique-id⟩⟨message-length⟩⟨message⟩

Where: ⟨unique-id⟩ is the address of the called terminal. ⟨message-length⟩ identifies the length of the field ⟨message⟩. ⟨message⟩ is the unit of information to be transferred from a calling terminal to a specific called terminal.

8) Network Group Unsolicited Information (NGUI) packet. This packet will be used to convey a datagram to a group of called terminals. NGUI packet parameters are:

⟨info-body⟩ :: = ⟨group-id⟩⟨message-length⟩⟨message⟩

Where: ⟨group-id⟩ univocally identifies the group of called terminals. ⟨message-length⟩ identifies the length of the field ⟨message⟩. ⟨message⟩ is the unit of information to be transferred from a calling terminal to a specific group of called terminals.

9) Network Group Membership (NGM) packet. This packet will be used to grant a membership relation to a specific called terminal. NGM packet parameters are:

⟨info-body⟩ ::= ⟨unique-id⟩⟨number-of-membership-tuple⟩
⟨membership-tuple⟩

Where:

⟨unique-id⟩ is the address of the called terminal. ⟨number-of-membership-tuple⟩ indicates the number of group membership relations contained in the NGM packet.

⟨membership-tuple⟩ ::= ⟨group-id⟩⟨information-provider-id⟩
⟨membership-duration⟩

Where:

⟨membership-tuple⟩ represents the group membership relation. ⟨information-provider-id⟩ identifies the group owner. ⟨group-id⟩ univocally identifies a specific group within the totally of groups owned by a single information-provider. ⟨membership-duration⟩ indicates the time after which the membership relation expires.

10) Network Group Membership Deletion (NGMD) packet.

This packet will be used to revoke a membership relation to a specific called terminal. NGMD packet parameters are:

⟨info-body⟩ ::= ⟨unique-id⟩⟨number-of-membership-tuples⟩
⟨membership-tuple⟩
⟨membership-tuple⟩ ::= ⟨group-id⟩⟨information-provider-id⟩ ⟨membership-duration⟩

Where: ⟨unique-id⟩ is the address of the called terminal. ⟨number-of-membership-tuples⟩ indicates the number of group membership relations contained in the NGM packet. ⟨membership-tuple⟩ represent the group membership relation. ⟨information-provider-id⟩ identifies the group owner. ⟨group-id⟩ univocally identifies a specific group within the totally of groups owned by a single information-provider. ⟨membership-duration⟩ indicates the time after which the membership relation expires.

11) Network Time Service (NTS) packet. This packet will be used to distribute a time stamp. NTS packet parameters are:

⟨info-body⟩ ::= ⟨time-stamp⟩

Where ⟨time-stamp⟩ is a time expression having a defined granularity.

This packet type is created by the broadcaster for synchronisation purposes.

Hereinafter a detailed description of the data distribution method is given with reference to previously defined packet structures and types.

The selective connection between a calling terminal and a called terminal over the unidirectional broadcast medium is achieved by means of the NCR packet that carries the address of the called terminal. The calling terminal sends an NCR packet to all end-users. At each terminal upon the reception of the NCR packet, the ⟨unique-id⟩ contained in the packet is compared with its own address; if they match, a connection between the calling terminal and the called terminal is established. Every other terminal having different ⟨unique-id⟩ ignores the NCR packet. Once a connection is established, the ⟨connection-duration⟩ is stored in the called terminal and the expiration time is computed through the internal clock, that is kept aligned with a central clock via the NTS packet.

Then the calling terminal sends the NI packets. Data to be transmitted are sent as a sequence of NI packets each containing a ⟨data-unit⟩. NI packets will be accepted by the called terminal only after a check of the ⟨calling-terminal-address⟩ to verify that they belong to an already established connection; no check of ⟨unique-id⟩ is needed on these NI packets once the connection was established and the called terminal remains in the connected status.

Any end-user may be concurrently engaged in several connections.

Every active connection is identified by the end-user by means of ⟨information-provider-id⟩ and ⟨multiplex-id⟩ parameters. Every information-provider can maintain multiple connections with different called terminals; this is referred to as the "instantiation" of many calling terminals within the information-provider, each calling terminal tied to a different connection and univocally identified by the pair of parameters: ⟨information-provider-id⟩ and ⟨multiplex-id⟩; all connections originating from a single information-provider will share the same ⟨information-provider-id⟩ but have different ⟨multiplex-id⟩.

Connections may be mapped from 1 to N; in this case NCR packets are sent from the calling terminal up to N called terminals. A connection can be terminated either explicitly at calling terminal request via an NDR packet, or automatically after the expiration of a period of time specified in ⟨connection-duration⟩ parameter contained in the NCR packet. Reception of the NDR packet by the called terminal will cause a connection termination provided that the ⟨unique-id⟩ carried by the NDR packet matches the address of the called terminal.

Each information-provider may enable a specific called terminal to be included in a specific group of which it is the "owner". Membership tuples are distributed from such information-provider on the NGM packet addressed to said specific terminal. Membership can either expire after a given period of time or be explicitly revoked at any time by the information-provider that is the group owner, sending an NGMD packet. The same value of ⟨group-id⟩ can represent different groups provided that they are owned by different information-providers having different ⟨information-provider-id⟩; this prevents conflicts in the attribution of ⟨group-id⟩. Group membership relation is represented by the following tuple:

⟨group-id⟩⟨information-provider-id⟩⟨membership-duration⟩

whereas ⟨information-provider-id⟩ univocally identifies the group owner that splits the plurality of the called terminals into groups; ⟨group-id⟩ univocally identifies a specific group within the totality of groups owned by a single information-provider; no agreement is needed among the information-providers to ensure univocity of the ⟨group-id⟩ since it is always referred to the specific information provider.

⟨membership-duration⟩ is a required attribute of each membership tuple; it is a multiple of a given unit of time and specifies the duration of the membership relation for a specific called terminal. After that time the membership tuple is removed from a table present in the private storage of the called terminal. This means that the specific terminal is no longer a member of that group. A membership tuple can be removed from the membership table of a specific called terminal also before the expiration of ⟨membership-duration⟩; this is obtained by a NGMD packet sent from the information-provider, owner of the group, and addressed to the specific called terminal. The effect of such packet is to remove a specific terminal from a specific group.

A connection between a calling terminal and a group of called terminals can be achieved by means of an NGCR packet that carries the ⟨group-id⟩ of the called terminals. A group connection is accepted if the end-user is currently a member of the group specified in the ⟨group-id⟩ carried by the NGCR packet.

Once a connection is established, its expiration time is computed according to the ⟨connection-duration⟩ parameter.

Also during a multiple connection data is organised as a sequence of NI packets, each containing a ⟨data-unit⟩; NI packets will be accepted by each called terminal only after a check of the ⟨calling-terminal-address⟩ to verify that they belong to an already established connection; no check of the ⟨group-id⟩ is needed on these NI packets once the connection has been established. Every active connection is identified by the following parameters: ⟨information-provider-id⟩, ⟨multiplex-id⟩.

Each information-provider can maintain multiple connections with different groups of end-users; all connections originating from a single information-provider will share the same ⟨information-provider-id⟩ but have different ⟨multiplex-id⟩. This may be again referred to as the "istantation" of many calling terminals within the information-provider as already said in the case of single end-users (not grouped).

The activation of 1 to N connections can be obtained via a single NGCR packet provided that all called terminals belong to the same group.

Connection can be terminated either explicitly at calling terminal request (via a NGDR packet) or automatically after the expiration of a period of time that is a parameter contained in the NGCR packet. This value is referenced to as ⟨connection-duration⟩.

Reception of the NGDR packet by the called terminal will cause a connection termination provided that ⟨group-id⟩, ⟨information-provider-id⟩ and ⟨multiplex-id⟩ of the group address match one of the currently active group connections. A successful disconnection can happen simultaneously at many called terminals.

A connection activated with an NGCR packet can be terminated with an NDR packet; this means removing a specific called terminal from a group of called terminals.

The data distribution method here described requires a clock alignment maintained in every called terminal with the broadcaster and is used to enforce expiration of single connection, group connection and membership relation.

An NTS packet is used for giving the clock time to every end-user.

The data distribution method here described comprises also the possibility of selective distribution of high priority, asynchronous messages contained in a single NUI packet to a single end-user.

This NUI packet contains both the message and the ⟨unique-id⟩ of the addressee.

Data contained in the NUI packet is acquired by the end-user if the ⟨unique-id⟩ in the NUI packet matches the unique identifier of the called terminal.

No connection activation phase is required in this case.

The data distribution method here described allows also the selective distribution of high priority, asynchronous messages contained in a single NGUI packet to a group of end-users. The NGUI packet contains both the messages and the ⟨group-id⟩ of the addressees.

Data contained in the NGUI packet is received by the end-user if both ⟨group-id⟩ and ⟨information-provider-id⟩ in the NGUI packet match one of the membership tuples currently maintained in that called terminal.

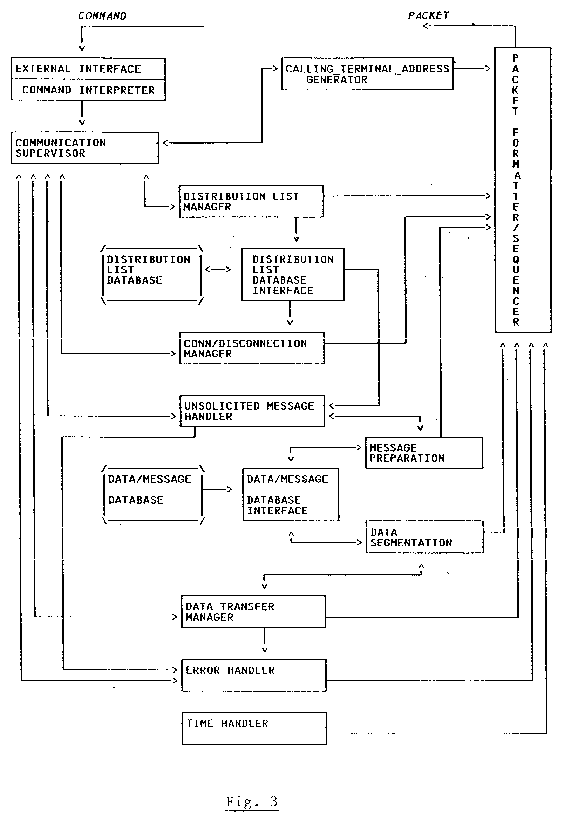

An apparatus for implementing the transmission protocol is described in Fig. 3.

A command, for example specifying the request to send a message or data to an end-user, is issued from the calling terminal to a Command Interpreter through an external interface.

The decoded command is sent to a Communication Supervisor that controls all transmission functions, selectively activating the different logic blocks each of them implementing the specific transmission protocol function ( i. e. connection, disconnection, data transfer, etc.).

The Calling Terminal Address Generator block provides the couple of parameters ⟨information-provider-id⟩ and ⟨multiplex-id⟩ forming the address of the calling terminal. This couple of parameters is put in every packet pertaining to a specific connection by the Packet Formatter Sequencer block. The Distribution List Manager block is responsible for updating the Distribution List Database containing the called terminal address and the group membership relations of the called terminal enabled to receive. It is also responsible for sending a request for the transmission of the NGM and NGMD packets to the Packet Formatter/Sequencer block. All the queries and the updating requests directed to the Distribution List Database block, are handled by the Database Manager indicated in the figure with the Distribution List Database Interface block. In the same manner, all queries directed to the Data/Message Database block are handled by the Data/Message Interface block. The Connection/Disconnection Manager block receives the called terminal address from the Distribution List Database block and issues requests for transmission of NCR, NDR, NGCR, NGDR packets to the Packet Formatter/Sequencer block.

The messages and the data to be transmitted reside in the Data/Message Database. The Data Transfer Manager block controls the segmentation of the data performed by the Data/Segmentation block.

The Data transfer Manager block handles also the Exception events through the Error Handler block that, in turn is responsible for sending an NE packet request to the Packet Formatter/Sequencer block.

Error Handler block also receives input from the Communication Supervisor and the Unsolicited Message Handler block. This block is responsible of managing the transmission of NUI, NGUI packets. To do this the called terminal address is requested to the Distribution List Database. A Message Preparation block keeps the message from the Data/Message Database, assembles it with the called terminal address and send it to the Packet Formatter/Sequencer block. A Time Handler block is present only if the information-provider acts also as the broadcaster; in this case it sends a time stamp to all end-users for remote clock synchronisation purposes.

The Packet Formatter/Sequencer block implements the algorithms for assembling the packet according to the structure defined for every type of packet. This block may also have storage capacity.

In a preferred embodiment the method for the unidirectional transmission of data is used for transmitting messages using as a support a TV signal according to CCIR specifications. In such embodiment the broadcaster receives messages originated from different information-providers and organises them so that they can be transmitted intermixed with conventional transmissions of TV programmes, for example during the field blanking interval or alone in a full-channel mode preserving the structure of the television synchronising signal.

Information-providers transfer data to the broadcaster using TP links or on a magnetic media support as disks or tapes.

In the preferred embodiment the above digitally encoded packets are transmitted concurrently with TV transmissions and this requires a fixed packet structure, such as the Teletext standard (Broadcast Teletext Specification ISBN 0 563 17261 4). The preferred embodiment of the invention is described with reference to the transmission method of ITA - 1215752 to RAI - Radio Televisione Italiana. Such type of packet has a fixed length of 42 bytes plus 3 bytes for clock synchronisation and packet delimitation.

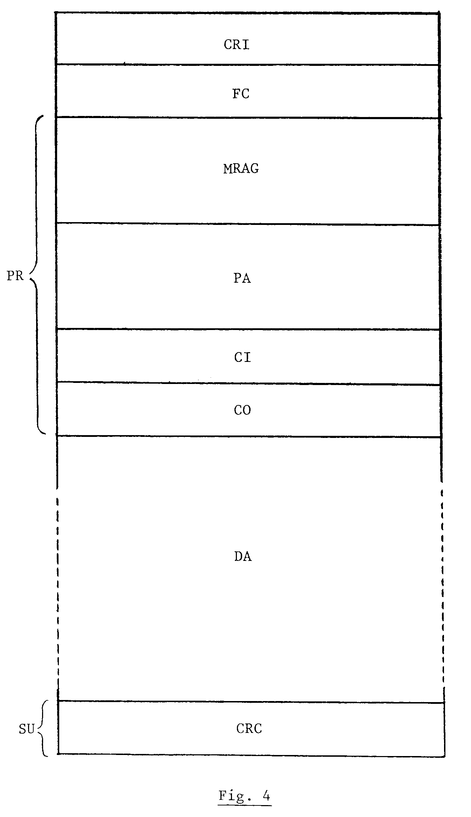

The following Table is referenced to the structure set forth in Fig. 4.

TABLE

```
PR    -  PRefix
SU    -  SUffix
CRI   -  Clock Run In
FC    -  Framing Code
MRAG  -  Magazine and Row Address Group
PA    -  Packet Address
CI    -  Continuity Indicator
CO    -  COntrol
DA    -  DAta block
CRC   -  Cyclic Redundancy Code


According to the Teletext Specifications every packet contains:
  *  CLOCK RUN-IN (CRI) field providing clock synchronisation;
  *  FRAMING CODE (FC) field providing packet delimitation;
  *  PACKET PREFIX field Hamming coded with:
        - MRAG - Magazine  and  Row  address;  this  field
                 represents the channel address;
        - PA - Packet Address field; this field is protected  by
                 the  Hamming  coding.
  *  CI + CO fields - Continuity indicator and control.
     These fields are protected  by  Hamming  code.
     During retransmitting of the same packet the CONTINUITY
     INDICATOR field does not  vary,   otherwise   it   cycles.
  *  DATA BLOCK field not Hamming encoded.
  *  CRC (Cyclic Redundancy Code) field.
     CRC protection spans over DA field.
```

It has to be noted that the fields (MRAG + PA) also include the ⟨calling-terminal-address⟩ parameter, the fields (CI + CO) include the ⟨continuity-index⟩ parameter, and ⟨info-header⟩ and ⟨info-body⟩ parameters are embodied in the DATA BLOCK field.

The broadcaster also act as an authentication authority having a "secure" mean to ascertain the identity of the information-provider from which it receives data.

Once the identity of the information-provider has been ascertained, the broadcaster checks the Packet Address (PA) of every packet presumably coming from an information-provider and verifies if the ⟨information-provider-id⟩ field is in accordance with the ascertained identity.

This embodiment strives to efficiently convey data or control information over previously defined teletext packet structure as shown in Fig. 4.

The end-user is provided with a decoder (or receiving adapter) with the following features:

1) Its own ⟨unique-id⟩ which represents the unique identifier referenced above. The specific ⟨unique-id⟩ is stored in an inalterable storage of the receiving adapter.

2) A group-membership table containing all the groups of which the end-user is a member and the membership duration.

3) A clock to be synchronised with the clock of the broadcaster.

An implementation of such adapter is described in co-pending application titled "Selective data broadcasting receiver adapter for personal computers".

None of the above features are instrumental in order to implement the described method but rather they rely with robustness of the implementation in terms of protection against non authorised end-users. The practical implementation may include some or all the above features.

The information-providers should have a system to organise their transmissions in data packets, to aggregate end-users into groups, to enable end-users to the reception of data and to disable end-users from the reception of data.

Conversely each end-user should have a receiving adapter and a system to recognise packets, to filter packets, to reassemble data.

**Claims**

1. Method for unidirectionally transmitting data consisting in a plurality of variable length messages originated from one or many independent, unrelated information-providers to a broadcaster which retransmits said data to one or more end-users or to groups of end-users, characterised by the fact that said broadcaster organises said transmissions as selective, simultaneous, transmissions of packets originating from said information-providers; said end-users being organised in groups directly by said information-providers, said groups being remotely and dynamically modifiable by said information-providers through enabling packets.

2. Method for transmitting data according to claim 1 having a selective distribution scheme in which the data to be transmitted are structured as digitally encoded packets, each of said packet having a calling terminal address field; said calling terminal address field having at least a couple of parameters, the first of which univocally identifying the information-provider, and the second univocally identifying a particular transmission directed from said information-provider to one end-user or to a group of end-users; said packet having a packet header specifying the packet type, and a packet body carrying the information of the specific packet type.

3. Method for transmitting data according to claims 1 and 2 and comprising the steps of:

establishing a one-way connection between a single information-provider and a single end-user, said connection being established through a command packet (NCR) carrying the unique identifier of the called terminal, said unique identifier being also stored in a permanent, non forgeable memory of said end-user; said connection being established only if said unique identifier in said first command packet (NCR) matches the unique identifier of said end-user;

transferring data to the end-user after said connection was established, said data being organised as a sequence of information packets (NI), said information packets (NI) being received by the called end-user only after a check of the calling terminal address to verify that they relate to an established connection;

terminating said connection in an implicit way by means of a connection duration parameter carried in said first command packet (NCR) and indicating the time after which the connection is automatically terminated, or in an explicit way by transmitting a second command packet (NDR) carrying a specific request of disconnection for said called terminal.

4. Method for transmitting data according to claims 1 and 2 and comprising the steps of:

establishing a one-way connection between a single information-provider and a group of end-users, said group being a dynamic aggregation of said end-users receiving the same data from said information-provider, said connection being established through a first command packet (NGCR) carrying the group identifier of said end-users, identifying a specific group within a plurality of groups owned by said information-provider; said connection being established if the group identifier in said first command packet (NGCR) and the information-provider identifier match the group identifier and information-provider identifier of a membership tuple stored in a membership table located at each end-user of the called group;

transferring data to said called terminals after said connection was established, said data being organised as a sequence of information packets (NI), said information packets being received by each end-user of the called group only after a check of the calling terminal address to verify that they relate to an established connection;

terminating said connection in an implicit way by means of a connection duration parameter carried in said first command packet (NGCR) and indicating the time after which said connection is automatically terminated, or in an explicit way by transmitting a second command packet (NDR) carrying a specific request of disconnection for a specific called terminal belonging to said group, or by transmitting a third command packet (NGDR) carrying a specific request of disconnection for all the called terminals which are members of that called group.

9

**5.** Method for transmitting data according to claims 1, 2, and 4 comprising the further step of:

remotely and dynamically updating the group membership table stored in a specific end-user unit through a fourth command packet (NGM) for allowing said end-user to be added to a group; said group membership being assigned by a membership tuple containing the information-provider identifier, the group identifier and the membership duration, said membership duration being an attribute of each membership tuple and specifying the duration of said group membership relation for said called terminal, after which said membership tuple being automatically removed from said group membership table or explicitly through a fifth command packet (NGMD) addressed from said information-provider to said specific called terminal; said fifth command packet (NGMD) carrying the unique identifier of said end-user.

**6.** Method for transmitting data according to claims 1 to 5 in which a broadcaster guarantees the identities of said information-providers to said end-users, said broadcaster being responsible for checking said calling terminal address of each transmitted packet.

**7.** Method for transmitting data according to claims 1 to 6 comprising the further step of:

distributing a central clock timing carried over a synchronising packet (NTS), said timing being used for establishing the duration of a single connection, a group connection or a group membership relation.

**8.** Method for transmitting data according to claims 1, 2, 3, 6, and 7 comprising the further step of:

selectively distributing high priority asynchronous messages to one or more end-users, said messages being transmitted by a single packet (NUI) containing also the identifier of the addressed called terminal and the information-provider identifier, the data contained in said packet (NUI) being received by the called terminal only if said identifier and said information-provider identifier in said packet (NUI) match the end-user identifier and and the information-provider identifier stored in that specific end-user unit.

**9.** Method for transmitting data according to claims 1, 2, 4, 5, 6, and 7 comprising the further step of:

selectively distributing high priority asynchronous messages to a group of end-users, said messages being transmitted by a single packet (NGUI) containing also the identifier of the addressed group and the information-provider identifier, the data contained in said NGUI packet (NGUI) being received by the called terminals only if said addressed group identifier and said information-provider identifier in said packet (NGUI) match the group identifier and the information-provider identifier of a membership tuple stored in that specific end-user unit.

Fig. 1

Fig. 2

12

Fig. 3

13

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | BBC RESEARCH DEPARTMENT REPORT, no. 10, August 1988, pages 1-18, BBC, Tadworth, Surrey, GB; D.T. WRIGHT: "Conditional access broadcasting: Datacare 2" <br> * Page 1, paragraph 1.2; page 3, paragraph 2.4; page 6, left-hand column, line 24 - page 15, left-hand column, line 12 * <br> --- | 1 | H 04 N 7/08 |
| Y | IDEM <br> --- | 2-4 | |
| A | IDEM <br> --- | 5 | |
| Y | INTERNATIONAL CONFERENCE ON COMMUNICATIONS, Chicago, 12th - 15th June 1977, pages 19.3-28 - 19.3-34, IEEE, New York, US; B. MARTI et al.: "Problems of choice of a teletext system in european countries" <br> * Page 19.3-29, lines 5-21 * <br> --- | 2 | |
| A | IDEM <br> --- | 7 | TECHNICAL FIELDS SEARCHED (Int. Cl.5) |
| Y | EP-A-0 161 913 (COMMUNICATIONS SATELLITE CORP.) <br> * Page 1, line 26 - page 2, line 11; page 2, line 29 - page 4, line 14; page 5, lines 13-17 * <br> --- | 3,4 | H 04 N |
| A | US-A-4 600 921 (W.L. THOMAS) <br> * Abstract * <br> --- | 5 | |
| D,A | US-A-4 829 569 (N. SETH-SMITH et al.) <br> * Figures 5,8 * <br> ---      -/- | 7 | |

The present search report has been drawn up for all claims

| Place of search | Date of completion of the search | Examiner |
|---|---|---|
| THE HAGUE | 11-07-1991 | BOSCH F.M.D. |

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | WO-A-8 102 961 (CAMPBELL et al.)<br>* Page 19, line 35 - page 20, line 10;<br>page 21, line 22 - page 22, line 2 * | 8,9 | |

TECHNICAL FIELDS SEARCHED (Int. Cl.5)

The present search report has been drawn up for all claims

| Place of search | Date of completion of the search | Examiner |
|---|---|---|
| THE HAGUE | 11-07-1991 | BOSCH F.M.D. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)